# EUROPEAN PATENT SPECIFICATION

(11) **EP 2 631 098 B1**
(45) Date of publication and mention of the grant of the patent: **29.04.2015**
(21) Application number: 12156898.4
(22) Date of filing: 24.02.2012
(51) Int. Cl.: B60H 1/00

(54) **Air flap assembly and vehicle Heating, Ventilating and/or Air Conditioning system**
Luftklappenanordnung und Fahrzeugheizungs-, Lüftungs- bzw. Klimatisierungssystem
Ensemble de volet d'air et système de chauffage, ventilation et/ou climatisation de véhicule

(43) Date of publication of application: 28.08.2013
(73) Proprietor: Valeo Autoklimatizace k.s., 269 44 Rakovnik (CZ)
(72) Inventor: Nedellec, Florian, 17000 Praha 7 (CZ); Zisko, Peter, 17000 Praha 7 (CZ)
(74) Representative: Vieillevigne, Sébastien Nicolas Bernard

(56) References cited:
- DE-U1- 9 314 348
- FR-A1- 2 710 960
- FR-A1- 2 757 609
- FR-A1- 2 797 810

## Description

The invention relates to an air flap assembly of a ventilation system of a vehicle heating, ventilating and/or air conditioning system comprising an air flap having a rotation axis and at least one vane extending in a sideward, preferably in a radial direction from the rotation axis. The vane has an outer edge along a free end of the flap and two side edges. The air flap assembly further comprises a casing having an air opening with a rim forming a seat for the air flap, the air flap having a closed position in which the flap rests against the seat of the air opening and seals the air opening, and an open position in which the flap is swiveled about the rotation axis relative to the closed position. The invention further relates to a vehicle heating, ventilating and/or air conditioning system of a vehicle with a ventilation system having at least one of the above air flap assembly.

Air flap assemblies of the above kind are known in which the air flap and the casing have rigid parts of a first plastic material. A sealing mechanism is made of a second softer material, in particular foam or a soft plastic material, which is deformable to form a seal between the air flap and the casing. Air flap assemblies comprising two different materials require complex production methods and therefore have relatively high production costs.

An air flap assembly of a well-known type is disclosed by FR 2 757 609, which is considered as the closest prior art.

The object of the invention is to provide a simple air flap assembly which provides a good seal and allows simple and inexpensive production.

The object of the invention is achieved by an air flap assembly of the above kind in which the air flap has a sealing mechanism comprising an outer groove and an outer protruding structure. One of the groove and the protruding structure extends at the seat of the air opening and the other one is provided on the vane of the air flap in the region of the outer edge of the air flap, wherein the protruding structure rests in the groove in the closed position of the air flap forming a seal of the air opening. According to the invention, the air flap consists of a homogenous plastic material. Preferably, the groove is provided at the seat of the air opening and the protruding structure is provided on the vane of the air flap. The protruding structure and the groove form a kind of labyrinth seal which allows good sealing function of the sealing mechanism. Such a seal does not require the deformation of the sealing material in the region of the seal and therefore allows the sealing mechanism to be made of a relatively rigid material. Simple design and low production costs are achieved by the fact that the air flap consists of a homogenous plastic material.

A good sealing function on all edges of the air flap can be achieved if the sealing mechanism further comprises at least one radially extending grooves in the rim of the air opening or in the region of each side edge of the air flap and comprising at least one protruding structure in the other of the air opening and the air flap.

The protruding structures can extend in circumferential direction and along the radial edges of the air flap, wherein the protruding structures rest in the grooves in the closed portion of the air flap forming a seal of the air opening. It is possible, that the outer protruding structure and the side protruding structures are disconnected. This defines different areas of the sealing mechanism, in which the protruding structures independently perform their sealing functions.

Alternatively the outer protruding structure and the side protruding structures may be connected. In such an embodiment, the sealing function is improved by the elimination of a gap between the outer and side protruding structures.

According to one embodiment of the invention, the vane of the air flap has at least one weakening area allowing resilient movement of the protruding structures in the closed position. In such an embodiment, the seal between the air flap and the casing is improved as the air flap may be deformed in order for the protruding structures to come in optimal sealing contact with the seat of the air opening.

The weakening area can allow resilient movement of the outer protruding structure in radial direction and the side protruding structures in axial direction.

Preferably, an actuator is provided which swivels the air flap about the rotation axis. An actuator eliminates the need for manual operation and allows smooth controlled movement of the air flap. Controlled slow movement of the air flap prevents unwanted noise generation when the air flap contacts the seat of the air opening.

The outer groove can have at least one outer lateral face having a radius larger than the radial extent of the air flap and/or at least one inner lateral face having a radius smaller than the radius of the inner face of the outer protruding structure seen in a radial sectional view.

The side grooves can have an outer lateral face and, preferably, an inner lateral face in analogy to the above configuration.

The inner or outer face of the outer groove and/or the radially extending grooves are provided at an angle between 0° and 90° to the radial or respectively axial direction. The outer protruding structure and/or of the side protruding structure rest against the angled faces in the closed position of the air flap. Preferably, the angle is between 45° and 85°. This configuration provides a defined direct sealing contact between the air flap and the casing along a line in which the protruding structures contact the angled faces of the grooves in the closed position of the air flap.

Preferably, a biasing means is provided which biases the outer protruding structure and/or of the side protruding structure against the angled face of the groove in the closed position of the air flap. The biasing means ensures on the one hand that the air flap remains in its closed position and on the other hand prevents the generation of a rattling noise during vibration of the air flap assembly.

In order to prevent noise due to friction between contact surfaces, all surfaces of the outer protruding structure and/or of the side protruding structure and outer groove and/or the radially extending groove which come in contact with each other during opening and/or closing operation are formed as smooth surfaces and are, preferably, coated with a lubricant.

According to one embodiment of the invention, the air flap is a butterfly flap with a central rotation axis and two vanes extending in radial direction from the rotation axis.

Fast operation of the air flap, relatively small moment of inertia of the air flap and a relatively large cross section of the opening is possible when the axial length of the at least one vane of the air flap is at least twice, preferably at least three times the radial width of the at least one vane of the air flap.

The object of the invention is further achieved by a vehicle heating, ventilating and/or air conditioning system of a vehicle with a ventilation system having at least one of the above-described air flap assemblies.

Further features and advantages of the invention are disclosed in the description below and the figures which are referenced to as particular non-limitative embodiments, in which:
- Figure 1 shows a side view in axial direction of an air flap assembly according to a first embodiment of the present invention in a closed position of the air flap,
- Figure 2 shows a detailed view of the air flap assembly of Figure 1,
- Figure 3 shows the air flap assembly of Figure 1 in a open position of the air flap,
- Figure 4 shows a detailed view of the air flap assembly of Figure 3,
- Figure 5 shows a perspective view of the air flap according to the first embodiment,
- Figure 6 shows a section view of an air flap assembly according to a second embodiment of the invention,
- Figure 7 shows a side view in axial direction of an air flap assembly according to a third embodiment of the present invention in a closed position of the air flap,
- Figure 8 shows a detailed view of the air flap assembly of Figure 7,
- Figure 9 shows the air flap assembly of Figure 7 in a open position of the air flap, ,
- Figure 10 shows a detailed view of the air flap assembly of Figure 9,
- Figure 11 shows a perspective view of the air flap according to the third embodiment, and
- Figure 12 shows a section view of an air flap assembly according to a fourth embodiment of the invention.

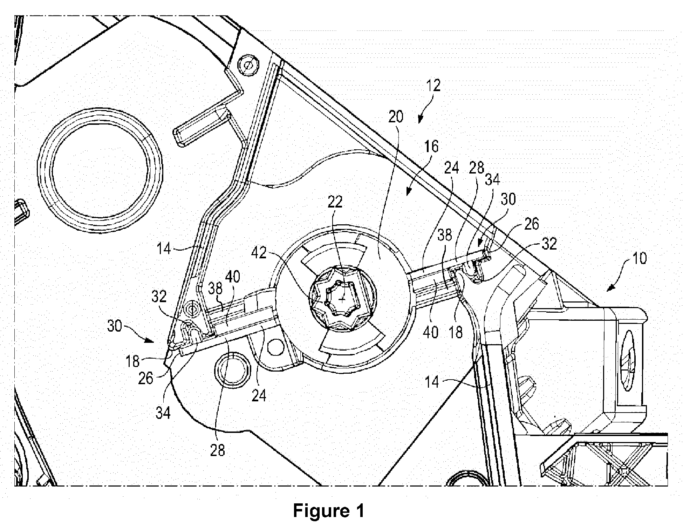

Figure 1 shows a vehicle heating, ventilating and/or air conditioning (HVAC) system 10 with an air flap assembly 12 provided in a housing of the heating, ventilating and/or air conditioning system 10. The air flap assembly 12 includes a casing 14, arranged within the heating, ventilating and/or air conditioning system 10, which has an air opening 16 through which an airflow can enter or exit the vehicle heating, ventilating and/or air conditioning system 10 or a compartment thereof. The air opening 16 has a rim which forms a seat 18 for an air flap 20. Particularly, Figure 1 shows a side view in axial direction of the air flap assembly 12 according to a first embodiment of the present invention in a closed position of the air flap 20.

The air flap 20 has a rotation axis 22 and at least one vane 24 extending in sideward, preferably in radial direction, having an outer edge 26, along a free end of the air flap 20, and side edges 28. According to a preferred embodiment, the air flap 20 currently disclosed in Figure 1 comprises two vanes 24.

In the present embodiment, the air opening 16 and the air flap 20 are essentially of rectangular shape, the outer edge 26 and the side edges 28 being at an angle of 90°. It is however also possible for the air opening 16 and the air flap 20 to have a different cross section, for example a circular, elliptical or irregular cross section.

The air flap 20 shown in Figure 1 is a butterfly flap 20 with a central rotation axis 22 and two vanes 24 extending in radial directions, preferably in an opposite direction at an angle of 180°. It is also possible that the two vanes 24 of the butterfly flap 20 are at an angle different than 180° or that the air flap 20 only has one vane 24 extending in a sideward or radial direction.

The casing 14 and the air flap 20 according to the first embodiment each consist, preferably, of a homogenous plastic material forming essentially rigid structures.

In Figure 1, the air flap 20 is shown in a closed position in which the air flap 20 rests against the seat 18 of the air opening 16 and seals the air opening 16.

A sealing mechanism 30 comprises an outer groove 32 extending at the seat 18 of the air opening 16 and an outer protruding structure 34 provided on each vane 24 of the air flap 20 in the region of the outer edge 26 of the air flap 20. The outer protruding structure 34 extends from the vane 24 of the air flap 20 in circumferential direction towards the seat 18 of the air opening 16.

In the closed position of the air flap 20, the protruding structure 34 rests in the groove 32 forming a labyrinth seal of the air opening 16.

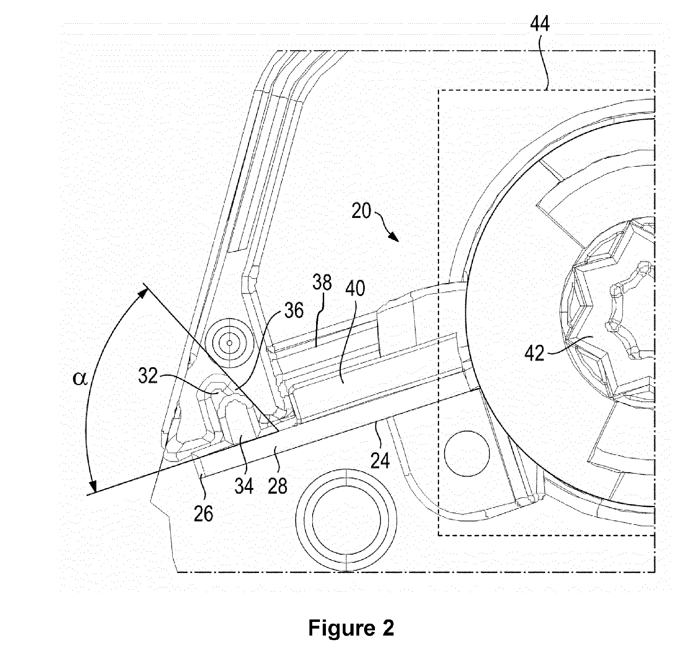

Figure 2 shows a detailed view of the region of the outer edge 26 of the air flap assembly 12 of Figure 1. The outer groove 32 has an inner face 36 and an outer face 48. The inner face 36 of the outer groove 32 is positioned to form an angle α to the radial direction. Therefore, the inner face 36 defines an angled face 36. In the closed position of the air flap 20, the outer protruding structure 34 of the vane 24 of the air flap 20 rests against the inner face 36. This forms a direct seal by direct contact between the air flap 20 and the seat 18 of the air opening 16 in the casing 14.

A further effect of the inner face 36 lies in an increased tolerance of the positioning of the air flap 20 and the casing 14 in radial direction.

In addition, on the side edges 28, the sealing mechanism 30 may further include at least one side groove 38 in the casing 14. In addition, the sealing mechanism 30 further includes at least one side protruding structure 40 in the air flap 20. The side groove 38 and the side protruding structure 40 are formed in analogy to the outer groove 32 and the outer protruding structure 34 forming a labyrinth seal and/or a seal by direct contact.

The outer protruding structure 34 and the side protruding structure 40 on each vane 24 of the air flap 20 are, for instance, disconnected from each other, dividing the sealing mechanism 30 into separate independent sealing regions. The outer groove 32 and the side groove 38 can be formed as separate grooves or a single continuous groove.

In the region of the rotation axis 22 of the air flap 20, a central protrusion 42 is provided. The central protrusion 42 can be form-fittingly connected to an actuator 44, schematically shown, in particular in form of a stepper motor. The actuator 44 swivels the air flap 20 about the rotation axis 22. The actuator 44 allows automatic operation of the air flap 20 and a smooth controlled movement, in particular at slow speeds. The slow controlled movement of the air flap 20 through the actuator 44 prevents unwanted generation of noise if the air flap 20 would hit of against the seat 18 of the air opening 16 at higher speeds.

In order to further avoid noises during operation of the air flap 20, all surfaces of the outer protruding structure 34 and/or the side protruding structure 40 and the outer groove 32 and/or the side groove 38, which come in contact with each other during opening and closing operation, are formed as smooth surfaces and/or are coated with a lubricant. This reduces noise generated by friction between the air flap 20 and the casing 14.

To prevent noise generated during vibration of the air flap assembly 12, a biasing means is provided which biases the outer protruding structure 34 and/or the side protruding structure 40 against the inner faces 36 of the outer groove 32 and/or the side groove 38 in the closed position of the air flap 20. In the first embodiment, the actuator 44 acts as the biasing means.

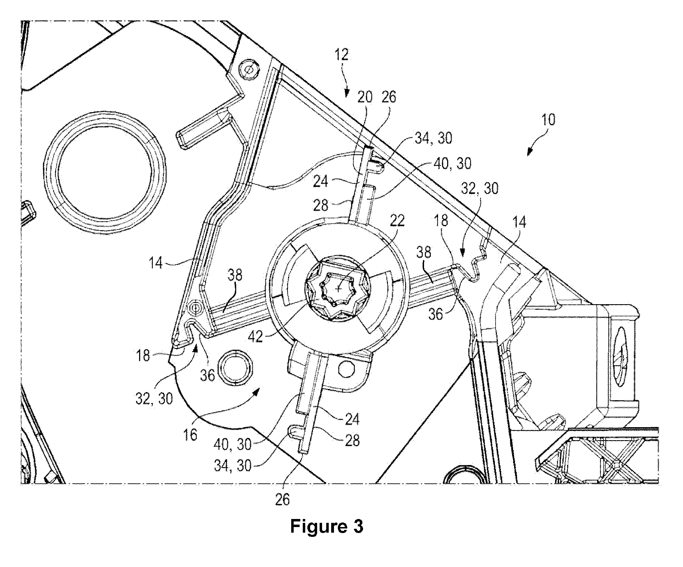

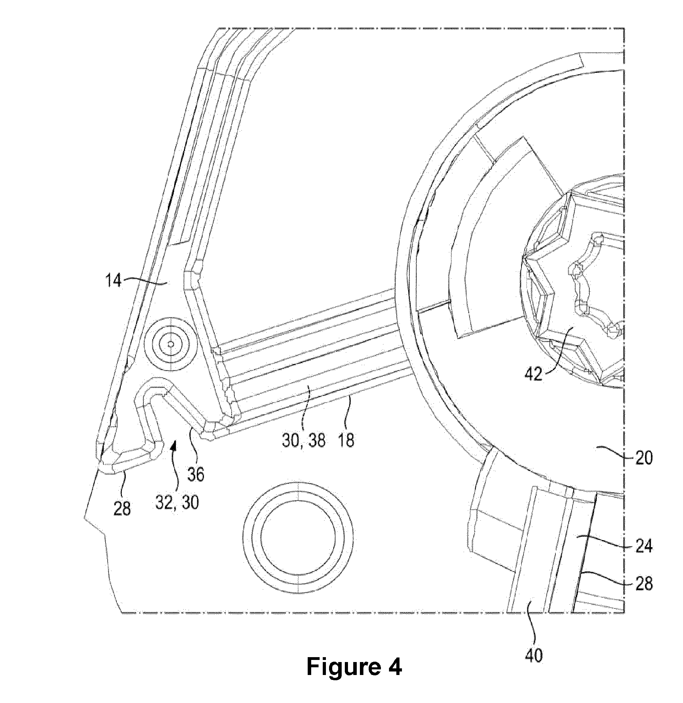

Figure 3 shows the air flap assembly 12 of Figure 1 in an open position of the air flap 20 and Figure 4 shows a detailed view of the air flap assembly 12 of Figure 3.

Figures 3 and 4 show the air flap 20 in an open position in which it is swiveled around the rotation axis 22 relative to the closed position shown in Figures 1 and 2, allowing air to flow through the air opening 16.

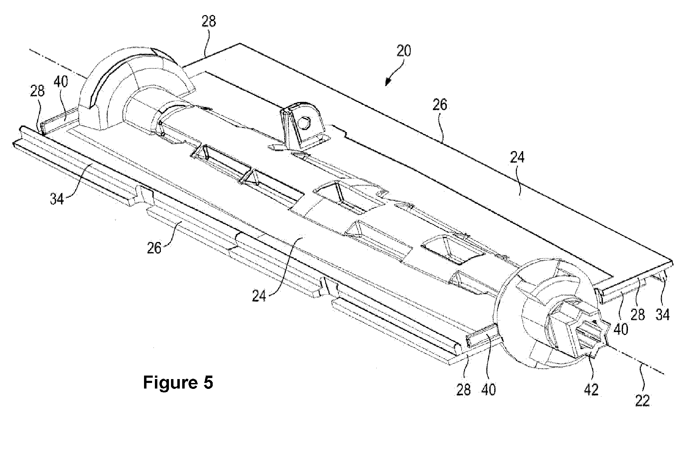

Figure 5 shows a perspective view of the air flap 20 according to the first embodiment. The two vanes 24 form a rectangular shape, the axial length of the vanes 24 of the air flap 20 being, preferably, between two to three times the radial width of the two vanes 24 of the air flap 20. The elongated shape allows rotation of the air flap 20 with relative small moment of inertia making a controlled movement possible at fast speeds.

According to the particular arrangement of the first embodiment shown on Figure 5, the outer edge 26, with the outer protruding structure 34, is divided in three sections by two recesses in the outer edge 26 of the vane 24. The sealing mechanism 30 for one vane 24 of the flap 20 is divided in five sealing regions comprising the two side regions and three outer regions.

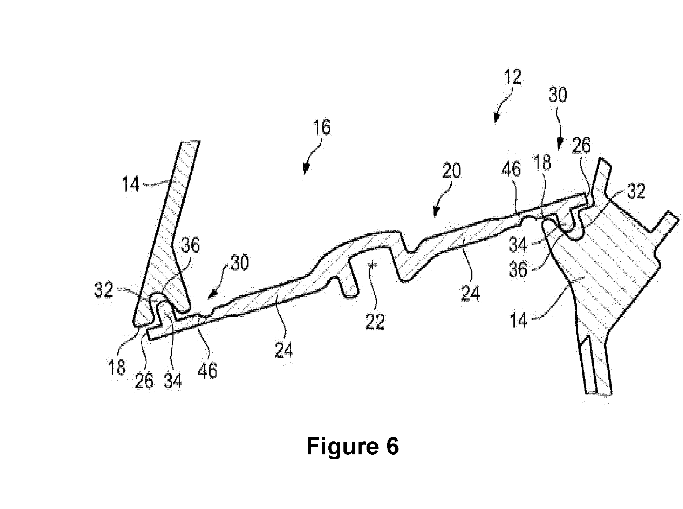

Figure 6 shows a section view of an air flap assembly 12 according to a second embodiment which is largely identical to the first embodiment.

According to the second embodiment the vane 24 of the air flap 20 has weakening areas 46 allowing resilient movement of the outer protruding structure 34 and/or the side protruding structure 40. The section view shown in Figure 6 shows the weakening area 46 associated with the outer protruding structure 34 on the outer edge 26 of the air flap 20. The weakening area 46 may be formed as a notch in the vane 24 of the air flap 20 running in axial direction parallel to the outer protruding structure 34 allowing the outer portion of the vane 24 to swivel relative to the inner portion of the vane 24, resulting in a movement of the outer protruding structure 34 in radial direction.

Weakening areas 46 associated with the side protruding structures 40 may likewise be formed as notches running parallel to the side protruding structures 40 in radial direction allowing a movement of the side protruding structures 40 in axial direction.

In the closed position of the air flap 20, the outer protruding structure 34 and/or the side protruding structure 40 are pressed against the inner face 36 of the outer groove 32 and/or the side grooves 38, respectively. The weakening areas 46 allow the resilient movement of the outer protruding structure 34 and/or the side protruding structure 40 forming an optimal sealing contact between the outer protruding structure 34 and/or the side protruding structure 40 and the corresponding face of the outer groove 32 and/or the side grooves 38.

Resilient deformation of the weakening areas 46 acts as a biasing means which biases the outer protruding structure 34 and/or the side protruding structure 40 against the inner faces 36 of the outer groove 32 and/or the side grooves 38 in a closed position of the air flap 20.

Separate sealing areas of the sealing mechanism 30 allow individual deformation of the corresponding weakening area 46 so that each section of the outer protruding structure 34 and/or the side protruding structure 40 is in its optimal position relative to the outer groove 32 and/or the side grooves 38.

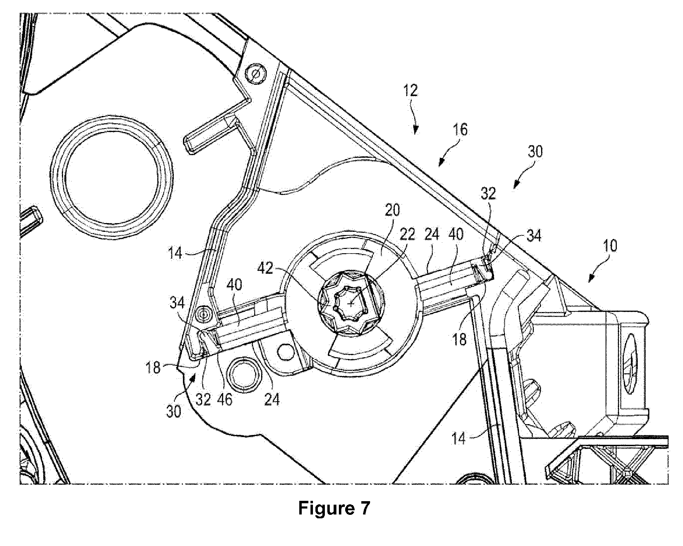

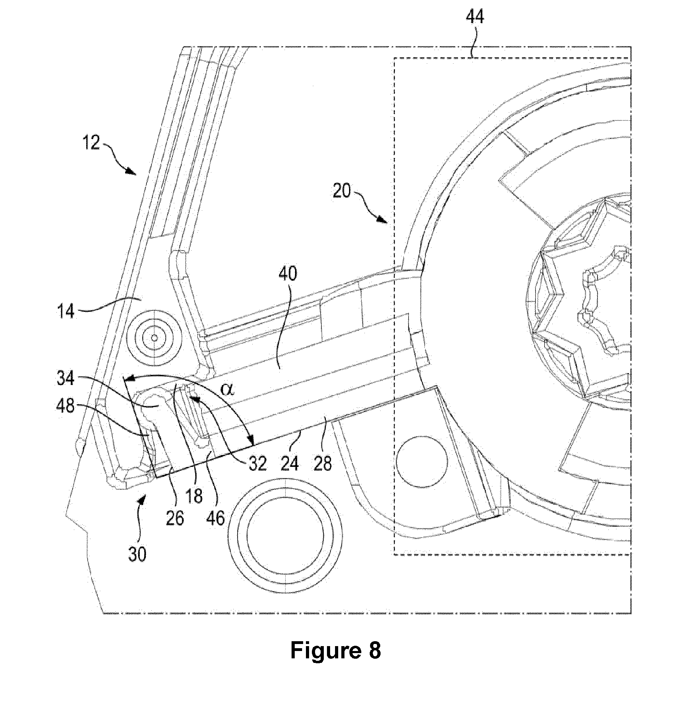

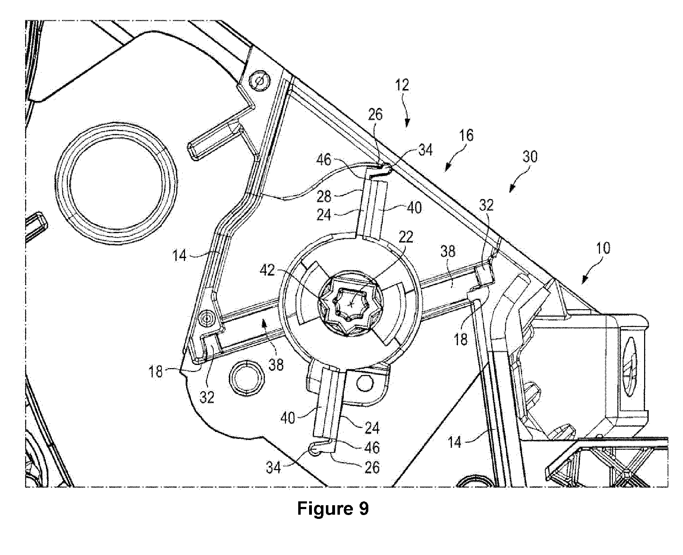

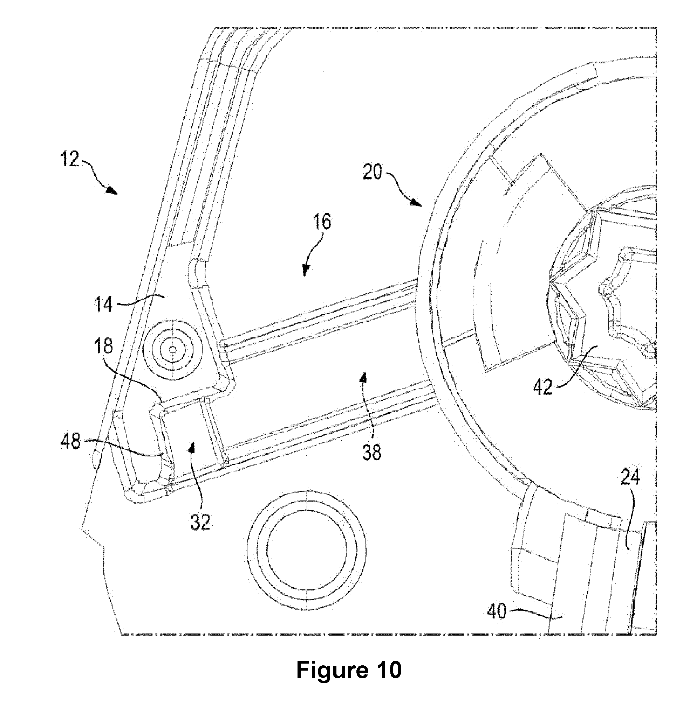

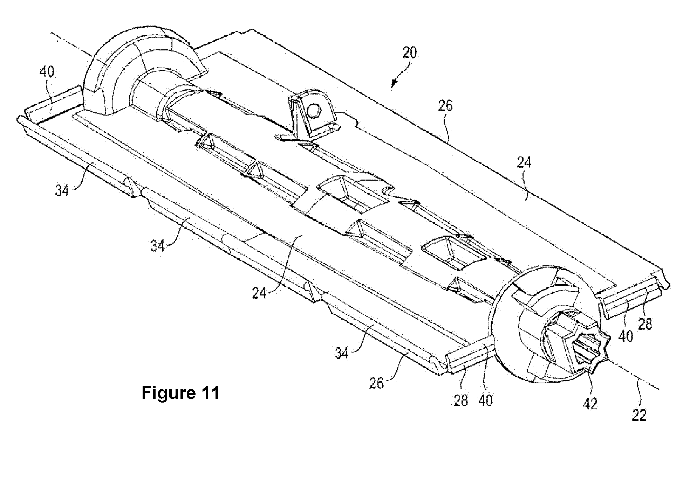

Figures 7 to 11 show a third embodiment of the air flap assembly 12. Particularly, Figure 7 shows a side view in axial direction of an air flap assembly 12 in a closed position of the air flap 20, Figure 8 shows a detailed view of the air flap assembly 12 of Figure 7, Figure 9 shows the air flap assembly 12 of Figure 7 in a open position of the air flap 20, Figure 10 shows a detailed view of the air flap assembly 12 of Figure 9, and Figure 11 shows a perspective view of the air flap 20 according to the third embodiment.

According to the third embodiment, the outer groove 32 and the side grooves 38 of the seat 18 in the casing 14 are formed as a step having an outer face 48 at an angle α, as depicted on Figure 8, to the radial direction. Therefore, the outer face 48 defines an angled face 48.

The air flap 20 has the outer protruding structures 34 and the side protruding structures 40 along with corresponding weakening areas 46 of the vanes 24 of the air flap 20 which allow resilient movement of the outer protruding structures 34 in radial direction and of the side protruding structures 40 in axial direction.

If the air flap 20 is closed, the outer protruding structures 34 and/or the side protruding structures 40 contact the outer face 48 of the outer groove 32 and/or the side grooves 38 and are elastically deformed towards the inside of the air opening 16 biasing the outer protruding structures 34 and/or the side protruding structures 40 against the outer face 48 of the outer groove 32 and/or the side grooves 38 creating a direct contact seal. The outer groove 32 and the side grooves 38 may be separate from each other or may be formed as a continuous groove.

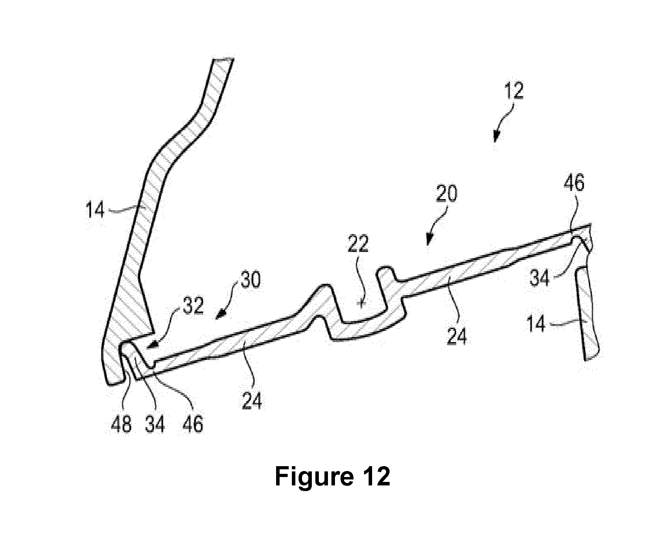

Figure 12 shows a section view of the air flap assembly 12 according to a fourth embodiment of the invention which is largely identical to the third embodiment and which has weakening areas 46 allowing resilient movement of the outer protruding structure 34 and/or the side protruding structure 40.

Features of the different embodiments presented in the above Figures can be combined to create further advantageous embodiments.

In particular, the groove or grooves could be provided on the vane 24 of the air flap 20 and the protruding structure 34 at the seat 18 of the air opening 16. Further, portions of the groove or grooves could be provided alternating on both the vane 24 and the air flap 20, and the corresponding protruding structures are alternatingly extending on the air flap 20 and the vane 24.

## Claims

1. Air flap assembly (12) of a ventilation system of a vehicle heating, ventilating and/or air conditioning system (10), comprising:
- an air flap (20) having a rotation axis (22) and at least one vane (24) extending in a sideward direction from the rotation axis (22), the vane (24) having an outer edge (26) along a free end of the air flap (20) and two side edges (28); and
- a casing (14) having an air opening (16) with a rim forming a seat (18) for the air flap (20),
- the air flap (20) having a closed position in which the air flap (20) rests against the seat (18) of the air opening (16) and seals the air opening (16), and an open position in which the air flap (20) is swiveled about the rotation axis (22) relative to the closed position,
the air flap assembly (12) has a sealing mechanism (30) comprising
- an outer groove (32) and an outer protruding structure (34) one of which being provided at the seat (18) of the air opening (16) and
- the other one of which being provided on the vane (24) of the air flap (20) in the region of the outer edge (26) of the air flap (20),
wherein the protruding structure (34) rests in the outer groove (32) in the closed position of the air flap (20) forming a seal of the air opening (16),
**characterized in that** the air flap (20) consists of a homogenous plastic material.

2. Air flap assembly according to claim 1, wherein the air flap (20) and the casing (14) consist of a homogenous plastic material.

3. Air flap assembly according to one of the preceding claims, wherein the outer protruding structure (34) extends parallel to the rotation axis (22).

4. Air flap assembly according to one of the preceding claims, wherein the sealing mechanism (30) further comprises at least one radially extending groove (38) in the rim of the air opening (16) or at the air flap (30) and at least one side protruding structure (40) in the region of the two side edges (28) of the air flap (20) and the air opening (16), respectively.

5. Air flap assembly according to claim 4, wherein the outer protruding structure (34) and the side protruding structures (40) are disconnected.

6. Air flap assembly according to claim 4, wherein the outer protruding structure (34) and the side protruding structures (40) are connected.

7. Air flap assembly according to one of the preceding claims, wherein the vane (24) of the air flap (20) has at least one weakening area (46) allowing resilient movement of the outer protruding structure (34) and/or of the side protruding structure (40).

8. Air flap assembly according to one of the preceding claims, wherein the outer groove (32) has at least one outer lateral face having a radius larger than the radial extent of the air flap (20) and/or at least one inner lateral face having a radius smaller than the radius of the inner face of the outer protruding structure (34) seen in a radial sectional view.

9. Air flap assembly according to claim 8, wherein an inner face (36) and/or an outer face (48) of the outer groove (32) and/or the radially extending groove (38) are provided at an angle between 0° and 90° to the radial or respectively axial direction.

10. Air flap assembly according to claim 9, wherein the outer protruding structure (34) and/or of the side protruding structure (40) rest against an angled face (36, 48) of the outer groove (32) in the closed position of the air flap (20).

11. Air flap assembly according to claim 10, wherein a biasing means is provided which biases the outer protruding structure (34) and/or of the side protruding structure (40) against the angled faces (48) of the grooves (32, 38) in the closed position of the air flap (20).

12. Air flap assembly according to one of the preceding claims, wherein all surfaces of the outer protruding structure (34) and/or of the side protruding structure (40) and the outer groove (32) and/or the radially extending groove (38) which come in contact with each other during opening and/or closing operation are formed as smooth surfaces and are preferably coated with a lubricant.

13. Air flap assembly according to one of the preceding claims, wherein the air flap (20) is a butterfly flap with a central rotation axis (22) and two vanes (24) extending in radial direction from the rotation axis (22).

14. Air flap assembly according to one of the preceding claims, wherein the axial length of the vane (24) of the air flap (20) is at least twice, preferably at least three times, the radial width of the at least one vane (24) of the air flap (20).

15. Vehicle heating, ventilating and/or air conditioning system (10) of a vehicle with a ventilation system having at least one air flap assembly (12) according to one of the preceding claims.

## Patentansprüche

1. Luftklappenanordnung (12) eines Belüftungssystems eines Fahrzeugheizungs-, -lüftungs- und/oder - klimatisierungssystems (10), umfassend:
- eine Luftklappe (20) mit einer Drehachse (22) und mindestens einer Schaufel (24), die sich in einer Seitwärtsrichtung von der Drehachse (22) erstreckt, wobei die Schaufel (24) eine Außenkante (26) entlang eines freien Endes der Luftklappe (20) und zwei Seitenkanten (28) aufweist; und
- ein Gehäuse (14) mit einer Luftöffnung (16) mit einem Rand, der einen Sitz (18) für die Luftklappe (20) bildet,
- die Luftklappe (20) mit einer geschlossenen Position, in der die Luftklappe (20) an dem Sitz (18) der Luftöffnung (16) anliegt und die Luftöffnung (16) abdichtet, und mit einer offenen Position, in der die Luftklappe (20) um die Drehachse (22) in Bezug auf die geschlossene Position geschwenkt wird,
wobei die Luftklappenanordnung (12) einen Dichtungsmechanismus (30) aufweist, umfassend
- eine äußere Nut (32) und eine äußere vorstehende Struktur (34), von denen eine am Sitz (18) der Luftöffnung (16) vorgesehen ist und
- die andere an der Schaufel (24) der Luftklappe (20) im Bereich der Außenkante (26) der Luftklappe (20) vorgesehen ist,
wobei die vorstehende Struktur (34) in der geschlossenen Position der Luftklappe (20) in der äußeren Nut (32) eine Abdichtung der Luftöffnung (16) bildet, **dadurch gekennzeichnet, dass** die Luftklappe (20) aus einem homogenen Kunststoffmaterial besteht.

2. Luftklappenanordnung nach Anspruch 1, wobei die Luftklappe (20) und das Gehäuse (14) aus einem homogenen Kunststoffmaterial bestehen.

3. Luftklappenanordnung nach einem der vorhergehenden Ansprüche, wobei sich die äußere vorstehende Struktur (34) parallel zu der Drehachse (22) erstreckt.

4. Luftklappenanordnung nach einem der vorhergehenden Ansprüche, wobei der Dichtungsmechanismus (30) ferner mindestens eine sich radial erstreckende Nut (38) in dem Rand der Luftöffnung (16) oder an der Luftklappe (30) und mindestens eine seitlich vorstehende Struktur (40) im Bereich der zwei Seitenkanten (28) der Luftklappe (20) bzw. der Luftöffnung (16) umfasst.

5. Luftklappenanordnung nach Anspruch 4, wobei die äußere vorstehende Struktur (34) und die seitlich vorstehenden Strukturen (40) getrennt sind.

6. Luftklappenanordnung nach Anspruch 4, wobei die äußere vorstehende Struktur (34) und die seitlich vorstehenden Strukturen (40) verbunden sind.

7. Luftklappenanordnung nach einem der vorhergehenden Ansprüche, wobei die Schaufel (24) der Luftklappe (20) mindestens einen Schwächungsbereich (46) aufweist, sodass eine elastische Bewegung der äußeren vorstehenden Struktur (34) und/oder der seitlich vorstehenden Struktur (40) ermöglicht wird.

8. Luftklappenanordnung nach einem der vorhergehenden Ansprüche, wobei die äußere Nut (32) mindestens eine äußere laterale Fläche mit einem Radius, der größer als die radiale Ausdehnung der Luftklappe (20) ist, und/oder mindestens eine innere laterale Fläche mit einem Radius, der kleiner als der Radius der Innenfläche der äußeren vorstehenden Struktur (34) im Hinblick auf einen Radialschnitt ist, aufweist.

9. Luftklappenanordnung nach Anspruch 8, wobei eine Innenfläche (36) und/oder eine Außenfläche (48) der äußeren Nut (32) und/oder die sich radial erstreckende Nut (38) in einem Winkel zwischen 0° und 90° in radiale bzw. axiale Richtung bereitgestellt wird.

10. Luftklappenanordnung nach Anspruch 9, wobei die äußere vorstehende Struktur (34) und/oder die seitlich vorstehende Struktur (40) an einer abgewinkelten Fläche (36, 48) der äußeren Nut (32) in der geschlossenen Position der Luftklappe (20) anliegen.

11. Luftklappenanordnung nach Anspruch 10, wobei ein Vorspannmittel bereitgestellt ist, das die äußere vorstehende Struktur (34) und/oder die aus der Seite vorstehende Struktur (40) an der abgewinkelten Fläche (48) der Nuten (32, 38) in der geschlossenen Position der Luftklappe (20) vorspannt.

12. Luftklappenanordnung nach einem der vorhergehenden Ansprüche, wobei alle Oberflächen der äußeren vorstehenden Struktur (34) und/oder der seitlich vorstehenden Struktur (40) und der äußeren Nut (32) und/oder der sich radial erstreckenden Nut (38), die während des Öffnens und/oder Schließens miteinander in Kontakt treten, als glatte Flächen ausgebildet und vorzugsweise mit einem Schmiermittel beschichtet sind.

13. Luftklappenanordnung nach einem der vorhergehenden Ansprüche, wobei die Luftklappe (20) eine Schmetterlingsklappe mit einer zentralen Drehachse (22) und zwei Schaufeln (24), die sich in radialer Richtung von der Drehachse (22) erstrecken, ist.

14. Luftklappenanordnung nach einem der vorhergehenden Ansprüche, wobei die axiale Länge der Schaufel (24) der Luftklappe (20) mindestens doppelt, vorzugsweise mindestens dreimal so breit wie die radiale Breite mindestens einer Schaufel (24) der Luftklappe (20) ist.

15. Fahrzeugheizungs-, -lüftungs- und/oder - klimatisierungssystem (10) eines Fahrzeugs mit einem Belüftungssystem mit mindestens einer Luftklappenanordnung (12) nach einem der vorhergehenden Ansprüche.

## Revendications

1. Ensemble de volet d'air (12) d'un système de ventilation d'un système (10) de chauffage, ventilation et/ou climatisation de véhicule, comprenant :
- un volet d'air (20) ayant un axe de rotation (22) et au moins une ailette (24) s'étendant dans une direction latérale depuis l'axe de rotation (22), l'ailette (24) ayant un bord extérieur (26) le long d'une extrémité libre du volet d'air (20) et deux bords latéraux (28) ; et
- un boîtier (14) ayant une ouverture d'air (16) avec un rebord formant un siège (18) pour le volet d'air (20),
- le volet d'air (20) ayant une position fermée dans laquelle le volet d'air (20) repose contre le siège (18) de l'ouverture d'air (16) et scelle l'ouverture d'air (16), et une position ouverte dans laquelle le volet d'air (20) est pivoté autour de l'axe de rotation (22) par rapport à la position fermée,
l'ensemble de volet d'air (12) ayant un mécanisme de scellage (30) comprenant
- une gorge extérieure (32) et une structure saillante extérieure (34), l'une d'entre elles étant prévue au niveau du siège (18) de l'ouverture d'air (16) et
- l'autre de celles-ci étant prévue sur l'ailette (24) du volet d'air (20) dans la région du bord extérieur (26) du volet d'air (20),
la structure saillante (34) reposant dans la gorge extérieure (32) dans la position fermée du volet d'air (20) en formant un joint d'étanchéité de l'ouverture d'air (16),
**caractérisé en ce que** le volet d'air (20) est constitué d'un matériau plastique homogène.

2. Ensemble de volet d'air selon la revendication 1, dans lequel le volet d'air (20) et le boîtier (14) sont constitués d'un matériau plastique homogène.

3. Ensemble de volet d'air selon l'une quelconque des revendications précédentes, dans lequel la structure saillante extérieure (34) s'étend parallèlement à l'axe de rotation (22).

4. Ensemble de volet d'air selon l'une quelconque des revendications précédentes, dans lequel le mécanisme de scellage (30) comprend en outre au moins une gorge s'étendant radialement (38) dans le rebord de l'ouverture d'air (16) ou au niveau du volet d'air (30) et au moins une structure saillante latérale (40) dans la région des deux bords latéraux (28) du volet d'air (20) et de l'ouverture d'air (16), respectivement.

5. Ensemble de volet d'air selon la revendication 4, dans lequel la structure saillante extérieure (34) et les structures saillantes latérales (40) sont déconnectées.

6. Ensemble de volet d'air selon la revendication 4, dans lequel la structure saillante extérieure (34) et les structures saillantes latérales (40) sont connectées.

7. Ensemble de volet d'air selon l'une quelconque des revendications précédentes, dans lequel l'ailette (24) du volet d'air (20) présente au moins une zone d'affaiblissement (46) permettant un mouvement élastique de la structure saillante extérieure (34) et/ou de la structure saillante latérale (40).

8. Ensemble de volet d'air selon l'une quelconque des revendications précédentes, dans lequel la gorge extérieure (32) présente au moins une face latérale extérieure ayant un rayon plus large que l'étendue radiale du volet d'air (20) et/ou au moins une face latérale intérieure ayant un rayon plus petit que le rayon de la face intérieure de la structure saillante extérieure (34), vu dans une vue en coupe radiale.

9. Ensemble de volet d'air selon la revendication 8, dans lequel une face intérieure (36) et/ou une face extérieure (48) de la gorge extérieure (32) et/ou de la gorge s'étendant radialement (38) sont prévues suivant un angle compris entre 0° et 90° par rapport à la direction radiale ou respectivement axiale.

10. Ensemble de volet d'air selon la revendication 9, dans lequel la structure saillante extérieure (34) et/ou la structure saillante latérale (40) reposent contre une face inclinée (36, 48) de la gorge extérieure (32) dans la position fermée du volet d'air (20).

11. Ensemble de volet d'air selon la revendication 10, dans lequel un moyen de sollicitation est prévu, lequel sollicite la structure saillante extérieure (34) et/ou la structure saillante latérale (40) contre les faces inclinées (48) des gorges (32, 38) dans la position fermée du volet d'air (20).

12. Ensemble de volet d'air selon l'une quelconque des revendications précédentes, dans lequel toutes les surfaces de la structure saillante extérieure (34) et/ou de la structure saillante latérale (40) et la gorge extérieure (32) et/ou la gorge s'étendant radialement (38) qui viennent en contact les unes avec les autres au cours de l'opération d'ouverture et/ou de fermeture sont formées sous forme de surfaces lisses et sont de préférence revêtues d'un lubrifiant.

13. Ensemble de volet d'air selon l'une quelconque des revendications précédentes, dans lequel le volet d'air (20) est un volet papillon avec un axe de rotation central (22) et deux ailettes (24) s'étendant dans la direction radiale depuis l'axe de rotation (22).

14. Ensemble de volet d'air selon l'une quelconque des revendications précédentes, dans lequel la longueur axiale de l'ailette (24) du volet d'air (20) est au moins deux fois, de préférence au moins trois fois, la largeur radiale de l'au moins une ailette (24) du volet d'air (20).

15. Système (10) de chauffage, ventilation et/ou climatisation de véhicule d'un véhicule comprenant un système de ventilation ayant au moins un ensemble de volet d'air (12) selon l'une quelconque des revendications précédentes.
